# EUROPÄISCHE PATENTSCHRIFT

(11) **EP 4 306 905 B1**
(45) Veröffentlichungstag und Bekanntmachung des Hinweises auf die Patenterteilung: **30.09.2026**
(21) Anmeldenummer: 23204311.7
(22) Anmeldetag: 08.02.2017
(51) Int. Cl.: G01C 9/26, G01B 3/08, G01C 9/28

(54) **WASSERWAAGE**
WATER SCALE
NIVEAU À EAU

(30) Priorität: 09.02.2016 DE 102016102210; 25.02.2016 DE 102016103334
(43) Veröffentlichungstag der Anmeldung: 17.01.2024
(62) Dokumentnummer(n) der früheren Anmeldung(en) nach Art. 76 EPÜ: 17155186.4 / 3 255 380
(73) Patentinhaber: STABILA Messgeräte Gustav Ullrich GmbH, 76855 Annweiler (DE)
(72) Erfinder: KALLABIS, Gabriel, 76848 Spirkelbach (DE); SETZER, Thorsten, 76855 Annweiler (DE)
(74) Vertreter: Stoffregen, Hans-Herbert

(56) Entgegenhaltungen:
- WO-A1-85/02660
- US-A1- 2002 121 026
- US-A1- 2013 326 895

## Beschreibung

Die Erfindung bezieht sich auf ein Verfahren zur Herstellung einer Wasserwaage umfassend einen Basiskörper mit einer ersten Messsohle und ein mit diesem verbundenes und relativ zu diesem in dessen Längsrichtung verschiebbares Auszugselement mit einer zweiten Messsohle, wobei die erste und die zweite Messsohle niveaugleich verlaufen.

Ausziehbare oder teleskopierbare Wasserwaagen bieten die Möglichkeit, eine Ausrichtung über Längen vorzunehmen, die den Grund- oder Basiskörper überragen. Das hierzu benutzte Auszugselement kann ein in dem Basiskörper verschiebbares Profilelement sein, dass im Schnitt eine Kreuzgeometrie aufweist, wie dies die DE 196 05 868 A1 vorsieht. Eine ähnliche Konstruktion findet sich in der DE 200 22 165 U1. Anstelle eines Kreuzprofils wird ein H-Profil verwendet.

Eine längenveränderbare Wasserwaage nach der US 2 419 451 A sieht vor, dass über eine Art Schwalbenschwanzverbindung Grund- oder Basiskörper und Auszugselement verbunden werden. Eine ähnliche Konstruktion findet sich bei der Auszugswasserwaage nach der US 149 532 A. Weitere ausziehbare Wasserwaagen sind z.B. der US 6 658 752 B1 oder der US 2002/0121026 A1 zu entnehmen.

Die DE 201 09 656 U1 bezieht sich auf eine teleskopierbare Wasserwaage, die ein Federelement aufweist, um eine Ausrichtung eines ausziehbaren Profilelementes zu einem zweiten Profilelement zu ermöglichen, das sich innerhalb des ersten Profilelements erstreckt.

Gegenstand der CN 201 259 421 Y ist eine teleskopierbare Wasserwaage, wobei über Federelemente ein Zurückziehen der Bauteile ermöglicht wird.

Die US 684,846 A schlägt eine Wasserwaage mit einem Auszug vor, dessen Messsohle niveaugleich zu dem des Basiskörpers verläuft.

Eine gleiche Konstruktion findet man bei einem ausziehbaren Maschinenelement nach der WO 85/02660 A1, das auch als Wasserwaage ausgebildet sein kann.

Der US 2013/0326895 A1 ist eine teleskopierbare Wasserwaage zu entnehmen, die aus einem äußeren Gehäuse und einem Libellen aufweisenden Auszugselement besteht.

Nachteil der vorbekannten ausziehbaren oder teleskopierbaren Wasserwaagen ist, dass die zueinander verschiebbaren Bauelemente, also Basiskörper und Auszugselement beim Verschieben derart zueinander kontaktiert sind, dass eine gewünschte Leichtgängigkeit nicht gegeben ist, insbesondere dann, wenn sich Staub oder Schmutz in dem Bereich ablagern sollte, in dem die Bauelemente aufeinandergleiten sollen.

Aus der DE 298 02 257 U1 ist ein Winkelmessgerät mit zwei Schenkeln bekannt, von denen ein Schenkel eine Verlängerungsschiene aufweist, deren Auflagefläche versetzt zu der des Schenkels verläuft. Die Verlängerungsschiene weist eine U-Geometrie mit innenseitig verlaufenden blattfederartigen Vorsprüngen auf, die sich an dem Schenkel abstützen.

Die US 2002/121026 A1 bezieht sich auf eine Teleskopwasserwaage, die einen als Rahmen bezeichneten Basiskörper und einen zu diesem verschiebbaren blockartig ausgebildeten Einsatz umfasst. Ferner weist der Rahmen außerhalb des Einsatzes einen Block auf, von dem Profilschienen ausgehen, die spielfrei den Einsatz aufnehmen sollen.

Aufgabe der vorliegenden Erfindung ist es, eine Wasserwaage umfassend einen Basiskörper mit einer ersten Messsohle und ein mit diesem verbundenes und relativ zu diesem in dessen Längsrichtung verschiebbares Auszugselement mit einer zweiten Messsohle, wobei die erste und die zweite Messsohle niveaugleich verlaufen, so herzustellen, dass sichergestellt ist, dass bei zu nutzender Wasserwaage die Messsohlen von Basiskörper und Auszugselement auf gleichem Niveau verlaufen.

Zur Lösung sieht die Erfindung vor, dass der Basiskörper und das Auszugselement zusammengesetzt werden und sodann deren Messsohlen gemeinsam bearbeitet werden.

Dabei erfolgt das Bearbeiten vorzugsweise durch Fräsen.

Durch diese Maßnahmen ist gewährleistet, dass die fertige Wasserwaage bezüglich der Messsohlen niveaugleich ausgebildet ist.

Dabei sollte das Bearbeiten der Messsohlen dann erfolgen, wenn die Wasserwaage nicht ausgezogen ist, also insbesondere der Basiskörper und das Auszugselement stirnseitig fluchtend oder im Wesentlichen fluchtend zueinander ausgerichtet sind.

Dabei ist insbesondere vorgesehen, dass zur Kraftbeaufschlagung des Auszugselements in oder in etwa in der Normalenrichtung der Messsohlen das erste und das zweite Gleitelement jeweils zumindest ein Federelement und/oder zumindest einen Federeigenschaften aufweisenden Abschnitt aufweisen.

Erfindungsgemäß werden Gleitelemente benutzt, die im Wesentlichen Basiskörper und Auszugselement in einem Umfang gegeneinander abstützen, dass eine problemlose Relativverschiebung zueinander erfolgen kann. Neben dieser Gleitfunktion üben die Gleitelemente jedoch auch eine Führungsfunktion derart aus, dass das Auszugselement unabhängig von dessen Stellung stets eine Kraftbeaufschlagung in Richtung der Messsohle in einem Umfang erfährt, dass die Messsohlen niveaugleich zueinander ausgerichtet sind.

Das erste und das zweite Gleitelement weisen jeweils zumindest ein Federelement und/oder zumindest einen Federeigenschaften aufweisenden Abschnitt zur Kraftbeaufschlagung des Auszugselementes in Richtung der Messsohle auf. Dabei ist insbesondere vorgesehen, dass das Gleitelement selbst mit zumindest einem Abschnitt die Federwirkung hervorruft. Dies ist insbesondere dann möglich, wenn das Gleitelement ein Kunststoff - wie Kunststoffspritzgussteil - ist, in dem ein Abschnitt derart ausgeformt ist, dass die gewünschte Federkraft erzeugbar ist.

Dadurch, dass das Gleitelement zumindest bereichsweise formschlüssig mit dem Auszugselement bzw. Basiskörper zusammenwirkt, ergibt sich der Vorteil, dass ein unmittelbares Aufliegen von Flächen des Basiskörpers und des Auszugselementes nicht erforderlich ist, die senkrecht zu den Seitenflächen der Wasserwaage verlaufen. Zwischen unmittelbar benachbart zueinander verlaufenden senkrecht zu den Seitenflächen sich erstreckenden Flächen kann somit ein Abstand gegeben sein, wodurch die Leichtgängigkeit sichergestellt ist. In dem Zwischenraum kann ein Abschnitt der Gleitelemente verlaufen. Die diesbezüglichen Merkmale weisen einen eigenständigen erfinderischen Gehalt auf.

Zur konstruktiven Lösung, die die Verschiebbarkeit von Basiskörper und Auszugselement zueinander ermöglicht, sieht die Erfindung in Weiterbildung vor, dass von dem Grundkörper zumindest ein in dessen Längsrichtung sich erstreckender erster Vorsprung ausgeht, der einen von dem Auszugselement ausgehenden und in dessen Längsrichtung verlaufenden zweiten Vorsprung hintergreift, und dass zwischen überlappenden Bereichen des ersten und zweiten Vorsprungs sich zumindest bereichsweise ein Abschnitt des ersten und/oder zweiten Gleitelementes erstreckt.

Ferner kann vorgesehen sein, dass von dem Basis- oder Grundkörper ein parallel zu dem ersten Vorsprung verlaufender dritter Vorsprung ausgeht, der einen parallel zu dem zweiten Vorsprung verlaufenden und von dem Auszugselement ausgehenden vierten Vorsprung hintergreift, und dass zwischen sich überlappenden Bereichen des dritten und vierten Vorsprungs sich zumindest bereichsweise ein weiterer Abschnitt des ersten und/oder zweiten Gleitelementes erstreckt. Durch diese Maßnahmen ist ein sicheres Ausrichten und Verbinden von Auszugselement und Basiskörper gewährleistet, wobei gleichzeitig das Gleitelement bzw. die Gleitelemente eine Beabstandung in den überlappenden Bereichen bewirken, wodurch die leichte Verschiebbarkeit gegeben ist.

Insbesondere ist vorgesehen, dass der erste oder dritte Vorsprung ein L-Profilabschnitt des Grundkörpers ist bzw. der dritte oder erste Vorsprung ein T-förmiger Profilabschnitt mit parallel zur Seitenaußenfläche des Grundkörpers verlaufendem Querschenkel.

Der zweite und/oder vierte Vorsprung kann ein T-förmiger Profilabschnitt des Auszugselementes sein, wobei parallel zur Seitenaußenfläche des Auszugsprofils der Querschenkel verläuft.

Ferner sollten die Längsschenkel des zweiten und vierten Vorsprungs und einander zugewandte Schenkelabschnitte von deren Querschenkeln einen kanalartigen Abschnitt begrenzen. Innerhalb des kanalartigen Abschnitts kann ein Exzenter angeordnet sein, mittels dessen das Auszugselement zu dem Basiskörper fixiert werden kann, so dass eine Längsverschiebbarkeit nicht mehr möglich ist.

Die Erfindung sieht daher insbesondere vor, dass von dem Grundkörper ein Betätigungselement ausgeht, das mit dem Exzenterelement verbunden ist, das abschnittsweise innerhalb des in Längsrichtung der Wasserwaage verlaufenden kanalartigen Abschnitts verläuft.

Bei über den Exzenter fixiertem Auszugselement übt das Exzenterelement auf das Auszugselement eine Kraft in Richtung der Messsohle oder -fläche aus, damit die Niveaugleichheit beibehalten bzw. sichergestellt wird. Somit kann das Auszugselement nicht in Richtung des Federelements bzw. des Federeigenschaften aufweisenden Abschnitts des ersten Gleitelements bewegt werden, innerhalb dessen sich das Exzenterelement abschnittsweise erstreckt.

Ferner ist insbesondere vorgesehen, dass das Betätigungselement ein drehbares topfförmiges Element mit einer Handhabe, wie radial verlaufendem Steg, ist das von außenliegender Seitenfläche des Basiskörpers ausgeht und insbesondere in dessen Seitenwandung in einem Umfang eingelassen ist, dass die Nutzung der Wasserwaage im Vergleich zu solchen, die nicht längenveränderbar sind, nicht beeinträchtigt wird. Daher sollte das Betätigungselement im Wesentlichen vollständig in dem Basiskörper eingelassen sein bzw. nur mit geringem Abstand, wie z.B. 1mm - 2mm, über dessen Seitenaußenfläche vorstehen.

Des Weiteren sollte der Exzenter derart ausgebildet sein, dass bei einer Drehung des Betätigungselements von maximal 180°, vorzugsweise im Bereich zwischen 45° und 90°, der Exzenter derart verstellt ist, dass das Auszugselement nicht mehr verschoben werden kann bzw. freigegeben ist.

Um die Konstruktion zu vereinfachen, kann das Exzenterelement abschnittsweise innerhalb des ersten Gleitelementes verlaufen und ist zu diesem sodann drehbar.

In Weiterbildung ist vorgesehen, dass messsohlenseitig verlaufender Schenkelabschnitt des Querschenkels des im Schnitt eine T-Form aufweisenden zweiten Vorsprungs, der von der Innenfläche des Auszugselementes abragt, einen im Schnitt L-förmigen kanalförmigen zweiten Abschnitt begrenzt, innerhalb dessen sich der von dem Basiskörper ausgehende erste Vorsprung erstreckt.

Ferner sieht die Erfindung in Weiterbildung vor, dass von dem Auszugselement ein sich in Richtung des Basiskörpers erstreckender und im Kopfbereich der Wasserwaage verlaufender fünfter Vorsprung abragt, der zu der Außenseite des kopfseitig verlaufenden dritten Vorsprungs des Basiskörpers ausgerichtet ist bzw. an dieser anliegt. Hierdurch ist eine eindeutige Abstandspositionierung zwischen Auszugselement und Basiskörper gegeben.

Um zu erfassen, in welchem Umfang das Auszugselement zu dem Basiskörper verstellt ist, also die wirksame Länge der Wasserwaage festzustellen, sieht ein weiterer Vorschlag der Erfindung vor, dass im Kopfbereich der Wasserwaage ein vorzugsweise eine Maßstabsmarkierung aufweisendes Leistenelement verläuft, das von dem Basiskörper gehalten ist und den zwischen dem Auszugselement und dem Basiskörper vorhandenen Freiraum verschließt. Dabei kann das Leistenelement vorzugsweise clipsartig in einen kanalförmigen Abschnitt des Basiskörpers klemmend fixiert werden. Der kanalförmige Abschnitt wird dabei von einem kopfseitig verlaufenden Randabschnitt der Innenseitenfläche des Basiskörpers, dem Längsschenkel des dritten Vorsprungs sowie dem kopfseitig verlaufenden Schenkelabschnitt des Querschenkels des dritten Vorsprungs begrenzt.

Zwischen der kopfseitig verlaufenden Außenfläche des fünften Vorsprungs sowie der Außenseite des kopfseitig verlaufenden Schenkelabschnitts des dritten Vorsprungs sowie randseitiger Innenfläche des Auszugselementes verläuft ein weiterer kanalförmiger Abschnitt, in den ein Abschnitt des Leistenelementes hineinragt.

Um das Verschieben des Auszugselementes zu dem Basiskörper zu begrenzen, also ein ungewolltes Lösen auszuschließen, sieht die Erfindung des Weiteren vor, dass das erste und/oder zweite Gleitelement einen die Längsverschiebung des Auszugselementes begrenzenden Anschlag aufweist. Dabei ist insbesondere vorgesehen, dass von dem Auszugselement - vorzugsweise mit dem zweiten Gleitelement verbunden - ein Distanzstück ausgeht, das mit dem von dem ersten Gleitelement ausgehenden Anschlag Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden Ausführungsbeispielen.

Es zeigen:
- Fig. 1: eine Wasserwaage in Vorderseitenansicht,
- Fig. 2: die Wasserwaage gemäß Fig. 1 in Rückenansicht ohne Auszugselement,
- Fig. 3: die Wasserwaage gemäß Fig. 1 und 2 in isometrischer und auseinandergezogener Darstellung,
- Fig. 4: den linken Endbereich der Wasserwaage der Fig. 1 und 3 in auseinandergezogener Darstellung,
- Fig. 5: den rechten Endbereich der Wasserwaage gemäß Fig. 1 bis 3 in auseinandergezogener Darstellung,
- Fig. 6: einen Schnitt entlang der Linie A-A in Fig. 1 in vergrößerter Darstellung,
- Fig. 7: einen Schnitt entlang der Linie B-B in Fig. 1 in vergrößerter Darstellung,

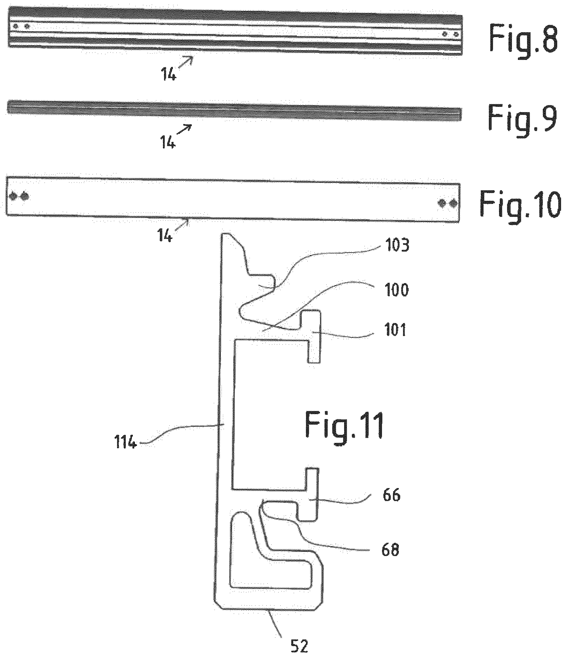

- Fig. 8: eine Innenansicht des Auszugselementes,
- Fig. 9: eine Draufsicht auf das Auszugselement gemäß Fig. 8,
- Fig. 10: eine Außenansicht des Auszugselementes gemäß Fig. 8 und 9,
- Fig. 11: eine Schnittdarstellung des Auszugselementes in vergrößerter Darstellung.
- Fig. 12: ein erstes Gleitelement in verschiedenen Ausrichtungen und
- Fig. 13: ein zweites Gleitelement in verschiedenen Ausrichtungen.

Das erfindungsgemäße Verfahren kann insbesondere bei einer Wasserwaage zur Anwendung gelangen, de nachstehend beschrieben wird.

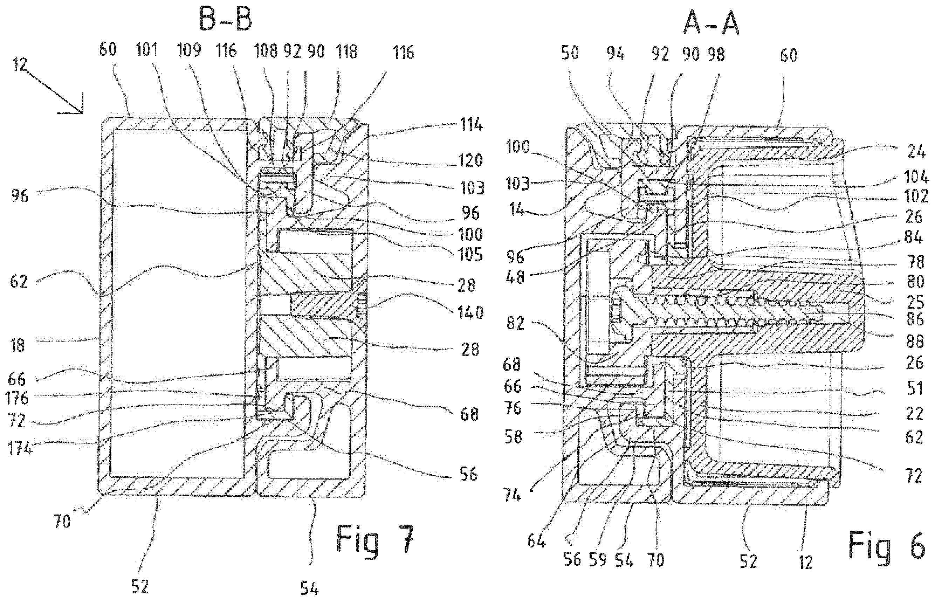

In den Figuren, in denen grundsätzlich gleiche Elemente mit gleichen Bezugszeichen gekennzeichnet sind, werden prägende Merkmale einer verlängerbaren bzw. auszieh- bzw. teleskopierbaren Wasserwaage 10 dargestellt, die
insbesondere in Bezug auf die Fig. 6, 7 und 11 - 13 selbsterklärend sind, ohne dass es weiterer Erläuterungen bedürfte.

Die Wasserwaage 10 besteht aus einem Basiskörper 12, der im Ausführungsbeispiel ein Abschnitt eines Vierkanthohlprofils aus Aluminium sein kann. Zu dem Basiskörper 12 ist ein Auszugselement 14 längsverschiebbar, um die Messlänge der Wasserwaage 10 im gewünschten Umfang zu verändern. Bei dem Auszugselement 14 kann es sich gleichfalls um einen Abschnitt eines Strangprofils als Aluminium handeln, dessen Geometrie der Fig. 11 selbsterklärend zu entnehmen ist.

In dem Basiskörper 12 ist des Weiteren in gewohnter Weise eine in einem Gehäuse 16 vorhandene Libelle vorgesehen, um eine Ausrichtung der Wasserwaage in Bezug auf die Horizontale bzw. Vertikale zu ermöglichen.

Von der Außenseitenfläche 18 des Basiskörpers 12 bzw. in dem Basiskörper 12, also in dem Profil eingelassen geht ein als Klemmknopf zu bezeichnendes Betätigungselement 20 aus, das eine Topfgeometrie mit scheibenförmiger Grundfläche 22 bzw. Basis und einer von dieser ausgehenden einen Hohlzylinder bildenden Umfangswandung 24 aufweist. Innerhalb des die topfförmige Geometrie aufweisenden als Klemmknopf zu bezeichnenden Betätigungselements 20 verläuft radial ein von der Grundfläche 22 vorstehender Steg 25, um den als Handhabe wirkenden Klemmknopf drehen zu können. Mittels des Klemmknopfes kann in nachstehend beschriebener Art und Weise das Auszugselement 14 zum Verschieben freigegeben oder fixiert werden.

Um das Auszugselement 14 reibungsarm zu dem Basiskörper 12 verschieben zu können, weisen der Basiskörper 12 und das Auszugselement 14 in den einander zugewandten Bereichen eine Profilierung auf, die im Wesentlichen durch sich hintergreifende Vorsprünge gebildet wird, wodurch die Längsführung gewährleistet ist. Um eine sichere Führung, insbesondere ein gutes Gleiten zu ermöglichen, sind Gleitelemente 26, 28 vorgesehen, von denen das Gleitelement 26 als erstes Gleitelement von der dem Auszugselement 14 zugewandten Innenfläche 30 des Basiskörpers 12 ausgeht. Das zweite Gleitelement 28 ist demgegenüber mit dem Auszugselement 14 verbunden.

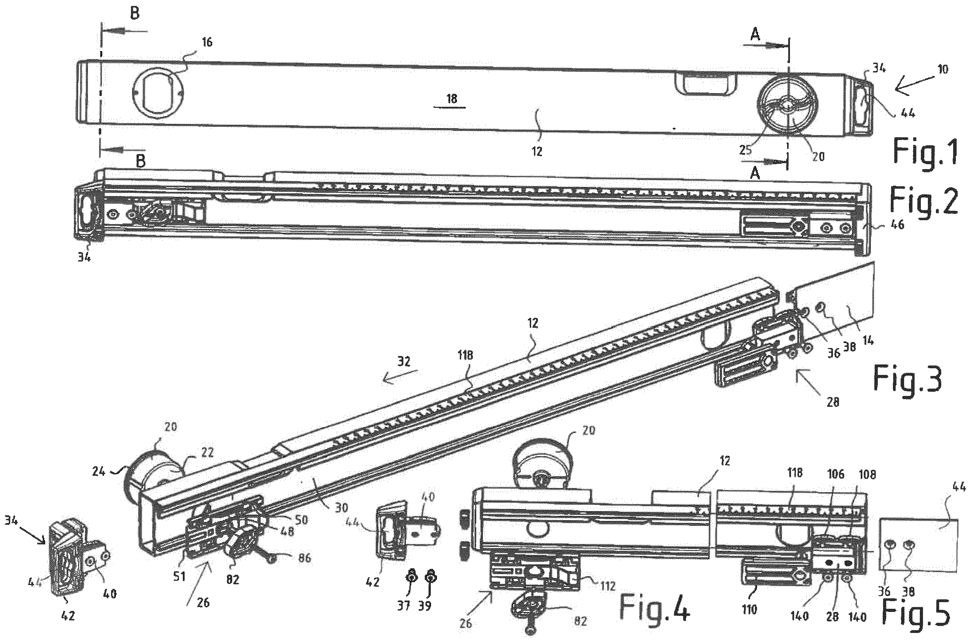

Wie sich aus der Darstellung der Fig. 3 ergibt, befindet sich das erste Gleitelement 26 in Auszugsrichtung (Pfeil 32) des Auszugselementes 14 im vorderen Ende des Basiskörpers 12, wohingegen das zweite Gleitelement 28 im hinteren Bereich des Auszugselementes 14 mit diesem verbunden ist. Um das Auszugselement 14 verschieben zu können, ist die in das Hohlprofil des Basiskörpers 12 einsteckbare vordere Endkappe 34 mit dem Auszugselement 14 verbunden. Hierzu weist im Ausführungsbeispiel das Auszugselement 14 in seinem vorderen Bereich zwei Bohrungen 36, 38 auf, die von Schrauben 37, 39 durchsetzt sind, die mit einem sich in Längsrichtung des Basiskörpers 12 erstreckenden fahnenartigen Abschnitt 40 der vorderen Endkappe 34 verschraubbar sind.

Die Endkappe 34 weist einen in Verlängerung der Wasserwaage 10 verlaufenden Abschnitt 42 mit einer Öffnung 44 auf, um zum einen die Endkappe 34 problemlos zu erfassen und somit das Auszugselement 14 zu verschieben und zum anderen die Wasserwaage zum Beispiel aufhängen zu können.

Im gegenüberliegenden Endbereich (in der Fig. 2 am rechten Ende) weist die Wasserwaage 10 eine Endkappe 46 auf, die gleichfalls in den Hohlkörper des Basiskörpers 12 steckbar und gegebenenfalls mit diesem verrastbar ist. Die Endkappe weist eine Erstreckung quer zur Längsachs der Wasserwaage 10 derart auf, dass auch das rückseitige Ende des Auszugselementes 14 bei nicht verlängerter Wasserwaage 10 abgedeckt ist.

Aus den Schnittdarstellungen gemäß der Fig. 6 und 7 sowie den Fig. 12 und 13 ergeben sich die wesentlichen Merkmale der Gleitelemente 26 und 28. Insbesondere ergibt sich jedoch aus den Fig. 6 und 7, dass der Basiskörper 12 und das Auszugselement 14 in Bezug auf ihre Messsohlen 52, 54 niveaugleich, also in derselben Ebene verlaufen. Um dies insbesondere auch bei der Nutzung der Wasserwaage 10 unabhängig von deren wirksamen Länge sicherzustellen, sind die Gleitelemente 26, 28 in nachstehend beschriebener Weise besonders ausgebildet bzw. wirken mit dem Auszugselement 14 derart zusammen, dass dieses in Normalenrichtung zu den Messsohlen 52, 54 kraftbeaufschlagt wird.

In der Fig. 6 (Schnitt A-A in Fig. 1) ist das mit dem Basiskörper 12 fest verbundene Gleitelement 26 dargestellt, das durch eine Schraffur gekennzeichnet ist, die entgegen dem Uhrzeigersinn geneigt von unten rechts nach oben links verläuft. Wie sich aus der Schnittdarstellung ergibt, erstreckt sich das Gleitelement 26 abschnittsweise zwischen Abschnitten des Basiskörpers 12 und des Auszugselementes 14. Ferner weist das Gleitelement 26 einen als Federelement wirkenden Abschnitt 48 auf, mittels dessen das Auszugselement 14 in Normalenrichtung der Messsohlen 52, 54 kraftbeaufschlagt wird. Der die Federkraft hervorrufende Abschnitt 48 hat die Funktion einer Blattfeder.

Der eine Federwirkung aufweisende Abschnitt 48 kann auch eine Kraft auf das Auszugselement 14 ausüben, die nur in etwa in Normalenrichtung der Messsohlen 52, 54 verläuft.

In der Zeichnung gemäß Fig. 3, 4, 6 und 12 a), 12 b), 12 f) oberhalb des nachstehend vereinfacht als Blattfeder bezeichneten die Federkaft erzeugenden Abschnitts 48 verläuft ein stegförmiger Abschnitt 50 des Gleitelementes 26, und zwar beabstandet zu dem Federelement 48. Der Steg 50 ist dabei oberer Rand eines flächig ausgebildeten rechteckförmigen Basisabschnitts 51 des Gleitelements 26.

Damit die erforderliche Kraft auf das Auszugselement 14 ausgeübt werden kann, gleichzeitig ein reibungsarmes Verschieben des Auszugselementes 14 zu dem Basiskörper 12 möglich ist, sind das Gleitelement 26 und die ineinandergreifenden Profilierungen vom Basiskörper 12 und Auszugselement 14 wie folgt gestaltet.

Wie sich aus der Schnittdarstellung der Fig. 6 ergibt, weist der Basiskörper 12 in seinem messsohlenseitigen Bereich einen im Schnitt L-förmigen ersten Vorsprung 56 auf, dessen in der Zeichnung vertikal verlaufender Schenkel 58 in Richtung der Kopffläche bzw. -wandung 60 des Basiskörpers 12 verläuft. Von der Innenwandung 62 des Profils des Basiskörpers 12, dem vertikal verlaufenden Schenkel 58 und einem in der Zeichnung horizontal verlaufenden Schenkel 59 des ersten Vorsprungs 56 wird somit ein Kanal 64 begrenzt, in dem ein Schenkelabschnitt 66 eines im Schnitt T-förmigen zweiten Vorsprungs 68 eingreift, der von dem Auszugselement 14 ausgeht. Der erste und zweite Vorsprung 56, 68 überlappen sich somit bereichsweise.

Zwischen den einander zugewandten und parallel zu den Messsohlen 52, 54 verlaufenden Flächen 70, 72 der Vorsprünge 56, 68 erstreckt sich ein Abschnitt 74 des ersten Gleitelementes 26, wie die Schraffur verdeutlicht. Des Weiteren erstreckt sich - versetzt zu der Schnittdarstellung A-A - abschnittsweise ein Abschnitt des Gleitelements 26 zwischen den vertikal verlaufenden überlappenden Bereichen der Vorsprünge 56, 68. Dies wird durch die nicht ausgefüllte Fläche 76 verdeutlicht.

Der in der Zeichnung oben verlaufende Steg 50 ist dabei oberer Rand eines flächig ausgebildeten Basisabschnitts 51 des Gleitelementes 26.

Aus der Schnittdarstellung ergibt sich des Weiteren, dass der Basisabschnitt 51 des Gleitelementes 26 von einem kragenförmigen Abschnitt 78 des Betätigungselements 20, also der Handhabe bzw. des Klemmknopfes durchsetzt wird, der einen Fortsatz 80 eines Exzenters 82 aufnimmt, der sich innerhalb einer kanalartigen Aussparung 84 des Auszugselementes 14 erstreckt. Der Exzenter 82 ist mittels einer Schraube 86 mit dem Klemmknopf verbunden. Hierzu weist der Steg 25 in seinem Mittenbereich eine entsprechende Aussparung 88 auf, wie selbsterklärend die Fig. 6 verdeutlicht.

Von dem Basiskörper 12 geht des Weiteren ein dritter Vorsprung 90 aus, der im Schnitt eine T-Geometrie mit Längsschenkel 92 und Querschenkel 94 aufweist. Der Längsschenkel 92 verläuft parallel zur Messsohle 52.

Der Längsschenkel 92 begrenzt mit dem messsohlenseitig verlaufenden Schenkelabschnitt 96 des Querschenkels 94 und der Innenwandung 62 des Basiskörpers 12 einen weiteren Kanal 98, in dem sich abschnittsweise ein im Schnitt T-förmiger vierter Vorsprung 100 erstreckt, der von der Innenseite des Auszugselementes 14 abragt. Somit hintergreifen sich der dritte Vorsprung 90 und der vierte Vorsprung 100 gleichfalls bereichsweise.

Zwischen den einander zugewandten und parallel zu der Kopffläche 60 verlaufenden Flächen 102 und 104 des dritten Vorsprungs 90 und dem Querschenkel 101 des vierten Vorsprungs 100 verlaufen der stegförmige Abschnitt 50 sowie die Blattfeder 48 des ersten Gleitelementes 26. Dabei wirkt die Blattfeder 48 auf den Querschenkel 101 des vierten Vorsprungs 100 und übt somit eine Kraft auf das Auszugselement 14 in Richtung der Messsohle 54 aus, und zwar in deren Normalenrichtung aus.

An der Außenseite des dritten Vorsprungs 90, also an dem Querschenkel 94 stützt sich ein fünfter Vorsprung 103 ab, der von dem Auszugselement 14 ausgeht, wie die zeichnerische Darstellung verdeutlicht.

Durch das Zusammenwirken des ersten Gleitelementes 26 mit Abschnitten sowohl des Basiskörpers 12 als auch des Auszugselementes 14, das Hintergreifen der ersten und zweiten bzw. dritten und vierten Vorsprünge 56, 68, 90, 100 sowie das Durchsetzen des Basiselements 51 von dem kragenförmigen Abschnitt 78 des Betätigungselements 20 bzw. Klemmknopfes ist eine Fixierung des ersten Gleitelementes 26 gegeben. Gleichzeitig ist sichergestellt, dass das Auszugselement 14 nur in Längsrichtung des Basiskörpers 12 verschoben werden kann.

Somit übt das Gleitelement 26 gleichzeitig die Funktion eines Führungselementes aus.

Die Schnittdarstellung gemäß Fig. 7 verdeutlicht noch einmal das Zusammenwirken der ersten und zweiten bzw. dritten und vierten Vorsprünge 56, 68, 90, 100. Ferner erkennt man, dass das zweite Gleitelement 28 mit dem Auszugselement 14 über Schrauben 140 verbunden ist.

Das zweite Gleitelement 28, das - wie das erste Gleitelement 26 - eine Rechteckgeometrie aufweist, weist an seinem oberen Rand als Feder wirkende Abschnitte 106, 108 auf, die gleichfalls quasi als Blattfedern wirken und in der zeichnerischen Darstellung einen kufenförmigen Verlauf besitzen.

Die Federelemente 106, 108 stützen sich an dem parallel zur Messsohle 52 verlaufenden Längsschenkel 92 dritten Vorsprungs 90 ab.

Ein im Schnitt U-förmiger Abschnitt 109 des zweiten Gleitelementes 28 umgibt den kopfseitig verlaufenden Abschnitt des Querschenkels 101 des vierten Vorsprungs 100, der von dem Auszugselement 14 ausgeht. Ferner erkennt man aus der Schnittdarstellung gemäß der Fig. 7, dass der freie äußere Abschnitt 105 (äußerer Seitenschenkel) des U-förmigen Abschnitts 109 zwischen den einander zugewandten Flächen des Abschnitts 96 des Querschenkels 94 des dritten Vorsprungs 90 und dem kopfseitig verlaufenden Schenkelabschnitt 101 des vierten Vorsprungs 100 verläuft. Zwischen den einander zugewandten Flächen der Innenwandung 62 des Basiskörpers 12 und der Querschenkel 101 des zweiten und vierten Vorsprungs 68, 100 verläuft gleichfalls abschnittsweise das zweite Gleitelement 28. Auch in dem von dem ersten Vorsprung 56 und dem zweiten Vorsprung 68 begrenzten Kanal 64 erstreckt sich abschnittsweise das zweite Gleitelement 26. Entsprechend den Abschnitten des ersten Gleitabschnitts 26 werden die entsprechenden Abschnitte mit den Bezugszeichen 174, 176 gekennzeichnet.

Zu dem Exzenter 82 ist anzumerken, dass dessen Umfangsgeometrie derart gewählt ist, dass der Klemmknopf bzw. das Betätigungselement 20 aus dem Handgelenk heraus gedreht werden muss, um eine Verstellung derart durchzuführen, dass entweder das Auszugselement 14 fixiert oder freigegeben ist.

Des Weiteren ist im Ausführungsbeispiel mit dem zweiten Gleitelement 28 ein Flanschstück 110 verbunden, das sich in Längsrichtung der Wasserwaage 10 erstreckt und bei maximal verlängerter Wasserwaage 10 mit einem Anschlag 112 zusammenwirkt, der von dem ersten Gleitelement 26 ausgeht. Hierdurch ist ein Herausziehen des Auszugselementes 14 ausgeschlossen. Der Anschlag 112 weist im Ausführungsbeispiel eine rampenförmige Geometrie auf.

In der Fig. 11 ist noch einmal das Profil des Auszugselements 14, das ein Abschnitt eines Strangprofils sein und aus Aluminium bestehen kann, dargestellt. Man erkennt die eine Außenfläche der Wasserwaage 10 bildende Außenwandung 114, von der im sohlenseitigen Bereich der zweite Vorsprung 68 T-förmiger Geometrie abragt. Im kopfseitigen Bereich geht der als vierter Vorsprung bezeichnete, gleichfalls eine T-förmige Geometrie aufweisende Vorsprung 100 aus. Beabstandet zu diesem und kopfseitiger verläuft der fünfte Vorsprung 103.

Zwischen der Wandung 114, den Längsschenkeln des zweiten und vierten Vorsprungs 68, 100 sowie den einander zugewandten Schenkelabschnitten der Querschenkel wird der Kanal gebildet, in dem sich der Exzenter 82 erstreckt. Durch Drehen des Exzenters 82 liegt dieser an dem Längsschenkel des zweiten Vorsprungs 68 an oder verläuft beabstandet zu den Längsschenkeln des zweiten und vierten Vorsprungs 68, 100, so dass das Auszugselement 14 fixiert oder freigegeben ist.

In fixierter Positionierung des Auszugselements 14 wirkt durch das Zusammenwirken des Exzenters 82 mit dem Längsschenkel des zweiten Vorsprungs 68 eine Kraft auf das Auszugselement 14 in Richtung dessen Messfläche oder -sohle 54 ein, wodurch gleichfalls sichergestellt wird, dass die Messsohlen oder -flächen 52, 54 niveaugleich verlaufen. Hierdurch wird auch bei Nutzung der Wasserwaage sichergestellt, dass das Auszugselement 14 nicht gegen die Feder 48 des Gleitelements 26 bewegt werden kann.

Aus den zeichnerischen Darstellungen ergibt sich, dass die parallel zu den Messsohlen 52, 54 verlaufenden Flächen der Vorsprünge 56, 68, 90, 100 von dem Basiskörper 12 und dem Auszugselement 14 beabstandet zueinander verlaufen.

Um die wirksame Länge der Wasserwaage 10, also den Umfang des zu dem Basiskörper 12 verstellten Auszugselements 14 zu erfassen, ist des Weiteren vorgesehen, dass in einer kanalförmigen Aufnahme 116, die im kopfseitigen Bereich des Basiskörpers 12 verläuft und von Abschnitten des dritten Vorsprungs 90 sowie der Innenwandung 62 des Basiskörpers 12 begrenzt ist, ein leistenförmiges sich entlang der Kopfseite des Basiskörpers 12 erstreckendes Element 118 klemmend fixiert ist, das in Verlängerung der Oberseite der Kopfseite 60 des Basiskörpers 12 verläuft und sich bis hin zur Außenwandung 114 des Auszugselementes 14 erstreckt. Ein im Schnitt L-förmiger Abschnitt 120 des leistenförmigen Elementes 118 erstreckt sich in dem Zwischenraum, der zwischen dem fünften Vorsprung 103 und dem kopfseitigen Rand der Außenwandung 114 verläuft. Außenseitig weist das Leistenelement 16 einen Maßstab auf, um somit die Auszugslänge des Auszugselementes 14 ablesen zu können.

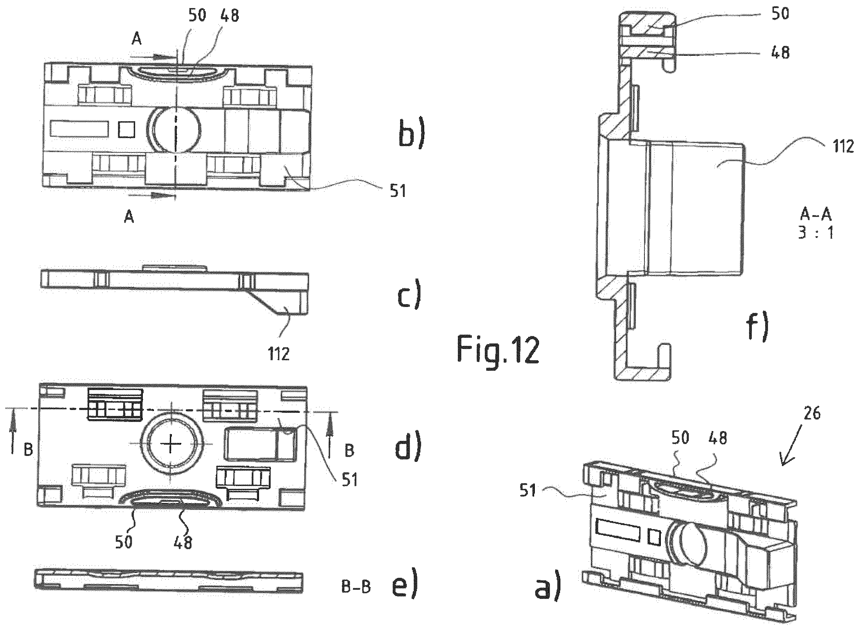

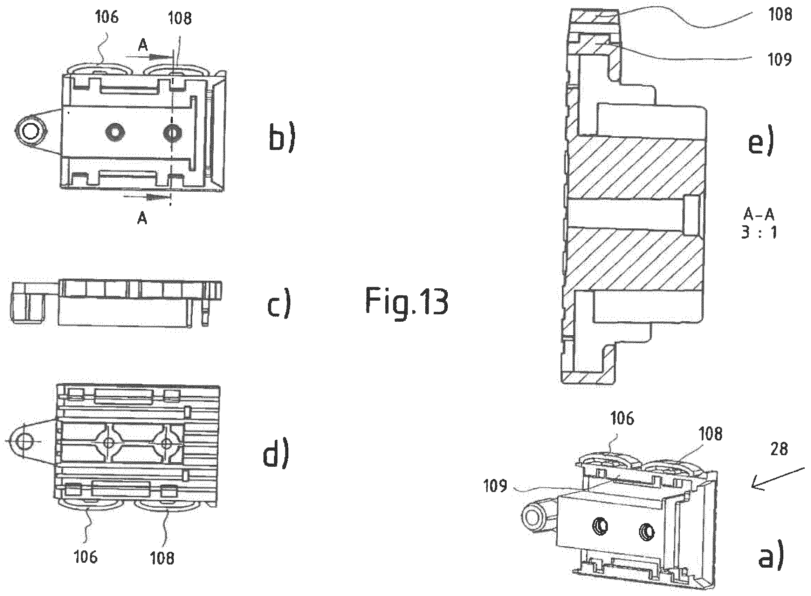

Aus den Fig. 12 und 13 ergeben sich Details des ersten und zweiten Gleitelements 26, 28, die auch als Führungselemente bezeichnet werden können. Insbesondere erkennt man die die Federwirkungen ausübenden Abschnitte 48 bzw. 106, 108, die Blattfedern gleichkommen.

Fig. 12 a) zeigt in isometrischer Darstellung das erste Gleitelement 26, Fig. 12 b) das Gleitelement 26 in Vorderansicht, Fig. 12 c) das Gleitelement 26 in Draufsicht, die Fig. 12 d) das Gleitelement 26 in Rückenansicht, die Fig. 12 e) das Gleitelement 26 in Unteransicht und Fig. 12 f) das Gleitelement 26 im Schnitt entlang der Linie A-A in Fig. 12 b) und in vergrößerter Darstellung.

In der Fig. 13 zeigt a) das Gleitelement 28 in isometrischer Darstellung, b) eine Vorderansicht des Gleitelements 28, c) das Gleitelement 28 in Draufsicht, d) das Gleitelement in Rückansicht und e) das Gleitelement 28 im Schnitt entlang der Linie A-A in Fig. 13 b) in vergrößerter Darstellung.

## Patentansprüche

1. Verfahren zur Herstellung einer Wasserwaage (10) umfassend einen Basiskörper (12) mit einer ersten Messsohle (52) und ein mit diesem verbundenes und relativ zu diesem in dessen Längsrichtung verschiebbares Auszugselement (14) mit einer zweiten Messsohle (54), wobei die erste und die zweite Messsohle niveaugleich verlaufen,
**dadurch gekennzeichnet,**
**dass** der Basiskörper (12) und das Auszugselement (14) zusammengesetzt und sodann deren Messsohlen (52, 54) gemeinsam bearbeitet werden.

2. Verfahren nach Anspruch 1,
**dadurch gekennzeichnet,**
**dass** beim Bearbeiten der Messsohlen (52, 54) des Basiskörpers (12) und des Auszugselements (14) diese stirnseitig fluchtend oder im Wesentlichen fluchtend zueinander ausgerichtet werden

3. Verfahren nach Anspruch 1 oder 2,
**dadurch gekennzeichnet,**
**dass** das Bearbeiten durch Fräsen erfolgt.

## Claims

1. A method for producing a spirit level (10) comprising a base body (12) with a first measuring sole (52) and a runner element (14) with a second measuring sole (54) being connected to the base body and movable relative to the base body in a longitudinal direction of the base body, wherein the first and the second measuring soles run at the same level,
**characterized in that**
the base body (12) and the runner element (14) are assembled, and then the first and second measuring soles (52, 54) are machined jointly.

2. The method according to claim 1,
**characterized in that**
during the machining of the measuring soles (52, 54) of the base body (12) and the runner element (14), the base body and the runner element are oriented flush, or substantially flush, with each other at an end face.

3. The method according to claim 1 or 2,
**characterized in that**
the machining is done by milling.

## Revendications

1. Procédé de fabrication d'un niveau à eau (10) comprenant un corps de base (12) avec une première semelle de mesure (52) et un élément extractible (14) relié à celui-ci et déplaçable dans le sens de la longueur par rapport à celui-ci, avec une seconde semelle de mesure (54), sachant que la première et la seconde semelles de mesure s'étendent au même niveau,
**caractérisé en ce**
**que** le corps de base (12) et l'élément extractible (14) sont assemblés et que leurs semelles de mesure (52, 54) fonctionnent donc ensemble.

2. Procédé selon la revendication 1,
**caractérisé en ce**
**que** lors de l'usinage des semelles de mesure (52, 54) du corps de base (12) et de l'élément extractible (14), celles-ci sont orientées l'une par rapport à l'autre de sorte à être alignées ou essentiellement alignées, côté frontal.

3. Procédé selon la revendication 1 ou 2,
**caractérisé en ce**
**que** l'usinage se fait par fraisage.
